# EUROPEAN PATENT APPLICATION

(11) **EP 4 039 600 A1**
(43) Date of publication of application: **10.08.2022**
(21) Application number: 21155267.4
(22) Date of filing: 04.02.2021
(51) Int. Cl.: B65B 3/26, B65B 9/20, G01S 13/88, G01F 23/22

(54) **PACKAGING APPARATUS, METHOD FOR PRODUCING SEALED PACKAGES AND USE OF A TDR SENSOR DEVICE IN A PACKAGING APPARATUS**

(71) Applicant: Tetra Laval Holdings & Finance S.A., 1009 Pully (CH)
(72) Inventor: MEDICI, Federica, 41122 Modena (IT); SANIBONDI, Paolo, 42124 Reggio Emilia (IT)
(74) Representative: Tetra Pak - Patent Attorneys SE

(57) **Abstract**

There is described a packaging apparatus (1) for forming a plurality of sealed packages (2) filled with a pourable product. The packaging apparatus (1) comprises a tube forming and sealing device (7) configured to form and longitudinally seal a tube (3) extending along a longitudinal axis (L) from a web of packaging material (4), a filling device (9) having a filling pipe (29) arranged, in use, within the tube (3) and being configured to direct, in use, the pourable product through the filling pipe (29) into the tube (3), a magnetic mark-reading device (34) configured to read magnetic markers arranged along the tube (3) and/or provided on the web of packaging material (4) and a time-domain reflectometry sensor device (37) connected to the filing pipe (31) and configured to determine a filling level of the pourable product within the tube (3). The filling pipe (29) acts as a probe head of the time-domain reflectometry sensor device (37) .

## Description

### TECHNICAL FIELD

The present invention relates to a packaging apparatus for producing sealed packages, in particular for producing sealed packages filled with a pourable product.

Advantageously, the present invention also relates to a method for producing sealed packages, in particular for producing sealed packages filled with a pourable product.

Advantageously, the present invention also relates to the use of a TDR sensor device in a packaging apparatus for producing sealed packages, in particular for producing sealed packages filled with a pourable product.

### BACKGROUND ART

As is known, many liquid or pourable products, such as fruit juice, UHT (ultra-high-temperature treated) milk, cream, water, wine, tomato sauce, salt, sugar, etc., are sold in packages made of a sterilized multilayer packaging material.

A typical example is the parallelepiped-shaped package for liquid or pourable food products known as Tetra Brik Aseptic (registered trademark), which is made by folding and sealing a multilayer packaging material. The multilayer packaging material comprises at least a layer of fibrous material, such as e.g. a paper or cardboard layer, and at least two layers of heat-seal plastic material, e.g. polyethylene, interposing the layer of fibrous material in between one another.

In the case of aseptic packages for long-term storage of products, such as UHT milk, the packaging material also comprises a layer of gas- and light-barrier material, e.g. aluminum foil or ethylene vinyl alcohol (EVOH) film, in particular being arranged between one of the layers of the heat-seal plastic material and the layer of fibrous material. Typically, the web of packaging material also comprises a further layer of heat-seal plastic material being interposed between the layer of gas- and light-barrier material and the layer of fibrous material.

Packages of this sort are normally produced on a fully automatic packaging apparatus, which comprises a conveying device for advancing the packaging material along an advancement path, a sterilization unit for sterilizing the packaging material, a tube forming and sealing device arranged within a sterile isolation chamber and configured to form and longitudinally seal a tube from the advancing packaging material, a filling device for directing the pourable product into the tube and a package forming unit configured to form and to transversally seal and cut the tube for obtaining the single packages.

Commonly, these packaging apparatuses also comprise a filling level determination device for determining the filling level of the pourable product within the tube. A typically used filling level determination device comprises a floater carrying one or more magnetic elements and being designed to float on the pourable product within the tube and a magnetic sensor configured to determine the position of the floater through detecting the position of the magnetic elements.

It should be furthermore considered that typically, the packaging material comprises a succession of repeated patterns, each pattern defining the pattern of one respective single package obtained at the end of the packaging process. Thus, the package forming unit must form and transversally seal and cut the tube such that the thus obtained packages carry the respective pattern. Therefore, each pattern comprises at least one marker, which is read by means of a mark reader of the packaging apparatus. The package forming unit operates in dependence of the information obtained from the mark reader.

In some cases, the marker is a magnetic marker and the mark reader is a magnetic mark reader.

Even though such packaging apparatuses operate satisfyingly well, an inconvenience has been found in that the magnetic field of the magnetic elements of the floater may disturb the measurement of the magnetic mark reader and vice versa, thereby reducing the preciseness of the determination of the magnetic markers and/or the position of the floater.

Therefore, a need is felt in the sector to further improve the packaging apparatuses in order to to overcome the above-mentioned inconvenience.

### DISCLOSURE OF INVENTION

It is therefore an object of the present invention to provide in a straightforward and low-cost manner an improved packaging apparatus.

According to the present invention, there is provided a packaging apparatus as claimed in claim 1.

Further advantageous embodiments of the packaging apparatus according to the invention are specified in the respective dependent claims.

Advantageously and according to the present invention, there is provided a method as claimed in claim 10.

Further advantageous embodiments of the method according to the invention are specified in the claims being directly or indirectly dependent on claim 15.

### BRIEF DESCRIPTION OF THE DRAWINGS

A non-limiting embodiment of the present invention will be described by way of example with reference to the accompanying drawings, in which:
Figure 1 is a schematic view of a packaging apparatus according to the present invention, with certain parts removed for clarity;
Figure 2 is a schematic partially sectioned side view of details of the packaging apparatus of Figure 1, with certain parts removed for clarity; and
Figure 3 is a schematic partially sectioned side view of a further detail of the packaging apparatus of Figure 1, with certain parts removed for clarity.

### BEST MODES FOR CARRYING OUT THE INVENTION

Number 1 indicates as a whole a packaging apparatus, in particular an automatic packaging apparatus, for (continuously) producing sealed packages 2 of a pourable product, in particular a pourable food product, even more particular a sterilized and/or a sterile-processed pourable food product, such as pasteurized milk, fruit juice, wine, water, salt, sugar, and similar.

In particular, the packaging apparatus 1 is configured to produce packages 2 from a tube 3 extending along a longitudinal (vertical) axis L formed of a web of packaging material 4.

The web of packaging material 4 has a multilayer structure (not shown) and comprises at least one layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of package 2 and eventually contacts the pourable product.

Preferably but not necessarily, the web of packaging material 4 also comprises a layer of gas- and light-barrier material, e.g. aluminum foil or ethylene vinyl alcohol (EVOH) film, in particular being arranged between one of the layers of the heat-seal plastic material and the layer of fibrous material. Preferentially but not necessarily, the web of packaging material 4 also comprises a further layer of heat-seal plastic material being interposed between the layer of gas- and light-barrier material and the layer of fibrous material.

According to the embodiment disclosed, the web of packaging material 4 comprises a succession of patterns and a plurality of magnetic markers. In particular, each pattern is associated with at least one magnetic marker.

In more detail, the magnetic markers are configured to mark the position of the patterns on the web of package material 4, where in particular, in use, the packaging apparatus 1 produces packages 2 depending on the position of the magnetic markers, so that each package 2 carries a respective (and correct) pattern.

Additionally, the magnetic markers are arranged along tube 3 after the folding of the web of packaging material 4 into the tube 3.

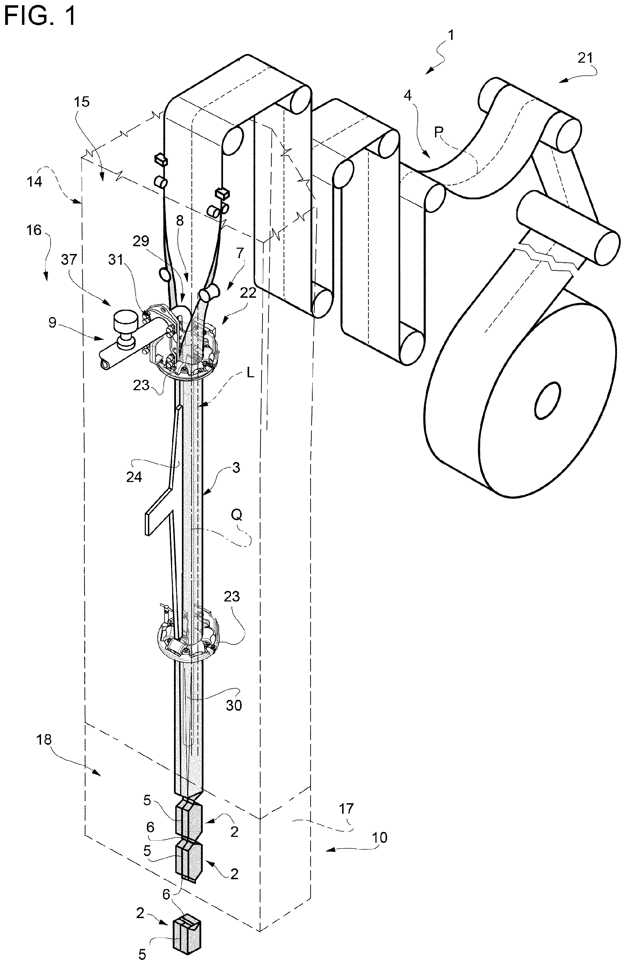

With particular reference to Figure 1, a typical package 2 obtained by the packaging apparatus 1 comprises a sealed longitudinal seam portion 5 and a pair of transversal seal portions 6, in particular a top transversal seal portion and a bottom transversal seal portion (i.e. one transversal seal portion 6 at an upper portion of package 2 and another transversal seal portion 6 at a lower portion of package 2).

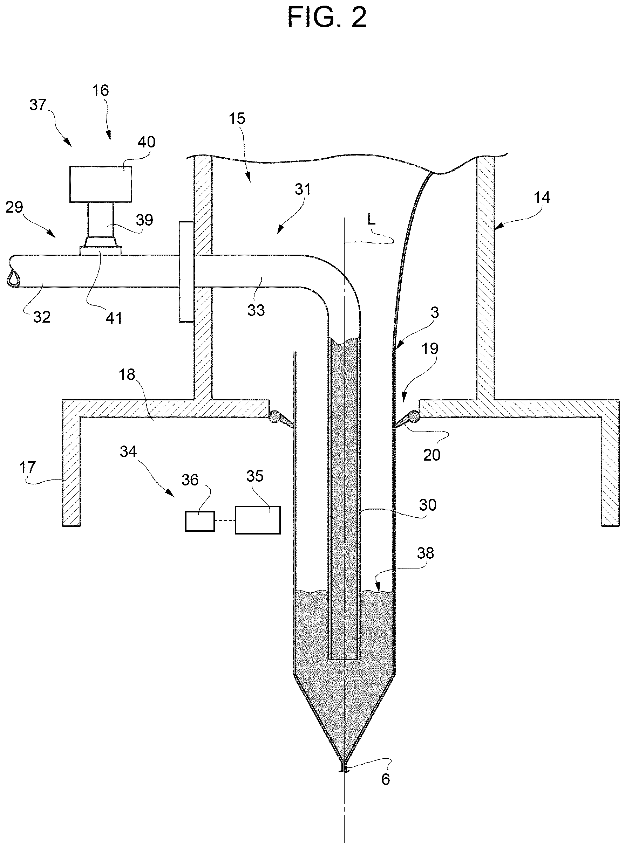

With particular reference to Figures 1 and 2, the packaging apparatus 1 comprises at least:
- a tube forming and sealing device 7 configured to form and longitudinally seal tube 3, in particular at a tube forming station 8, from a web of packaging material 4;
- a filling device 9 configured to fill the tube 3 with the pourable product; and
- in particular, a package forming unit (not shown and known as such) configured to form, to transversally seal and, preferably but not necessarily to transversally cut tube 3 for forming packages 2.

Advantageously, the packaging apparatus 1 also comprises a control unit configured to control the operation of the packaging apparatus 1.

Advantageously, the packaging apparatus 1 also comprises an isolation chamber 14 having an inner environment 15, in particular a sterile inner environment 15. In particular, the isolation chamber 14 separates the inner environment 15 from an (hostile) outer environment 16.

Preferentially, isolation chamber 14 has a vertical orientation.

Preferentially, the tube forming and sealing device 7 is at least partially arranged within inner environment 15 and configured to form and longitudinally seal tube 3 within inner environment 15.

With particular reference to Figure 1, the packaging apparatus 1 also comprises an auxiliary chamber 17 having an inner space 18. In particular, the auxiliary chamber 17 carries isolation chamber 14; i.e. according to the specific embodiment disclosed, the isolation chamber 14 is positioned above the auxiliary chamber 17.

According to some preferred non-limiting embodiments, in use, a first portion of tube 3 is arranged within the inner environment 15 and a second (final) portion of tube 3 is positioned within the inner space 18.

In more detail, the isolation chamber 14 and/or the auxiliary chamber 17 comprise(s) an opening 19 allowing for tube 3 to pass from the inner environment 15 into the inner space 18. Preferentially, isolation chamber 14 and/or auxiliary chamber 17 comprises a (floating) flange 20 arranged at opening 19 and configured to interact with the tube 3 so as to fluidically seal, in use, opening 19 in collaboration with tube 3.

According to some preferred non-limiting embodiments, the package forming unit is arranged within inner space 18, in particular so as to form, transversally seal and in particular to transversally cut tube 3 within the inner space 18.

According to some preferred non-limiting embodiments, the packaging apparatus 1 also comprises a conditioning device configured to control the condition within inner environment 15. In particular, the conditioning device is configured to introduce a sterile gas, e.g. sterile air and/or sterile nitrogen, into the inner environment 15 (so as to guarantee production under sterile and/or aseptic conditions). Further, the conditioning device could be configured to control the pressure within the inner environment 15, in particular to control an overpressure with respect to the outer environment 16.

According to some preferred non-limiting embodiments, the packaging apparatus 1 also comprises a conveying device 21 configured to (continuously) advance the web of packaging material 4 (in a manner known as such) along a web advancement path P and to (continuously) advance tube 3 along a tube advancement path Q.

In particular, the tube forming and sealing device 7 is configured to form, in use, the tube 3 from the advancing web of packaging material 4.

In particular, the package forming unit is configured to shape and transversally seal and in particular cut, in use, tube 3 during advancement of the tube 3 along the tube advancement path Q.

In particular, the web advancement path P extends between an initial station to the tube forming station 8, at which the web of packaging material 4 is formed, in use, into tube 3.

In particular, a conveying device 21 is configured to advance the tube 3 and, in particular also any intermediate version of the tube 3, in a manner known as such, along a tube advancement path Q from the tube forming station 8 to and at least partially through an auxiliary chamber 17 and/or inner space 18.

In particular, the wording "intermediate version of the tube 3" means any configuration of the web of packaging material 4 prior to obtaining the tube structure and after folding of web of packaging material 4 by the tube forming and sealing device 7 has started. In other words, the intermediate versions of the tube 3 are a result of a gradual folding of the web of packaging material 4 in order to to obtain tube 3, in particular by overlapping the lateral edges of web of packaging material 4 with one another.

Preferably but not necessarily, the packaging apparatus 1 also comprises a sterilizing unit (not shown, but known as such) adapted to sterilize, in use, in particular by means of chemical and/or physical sterilization, the advancing web of packaging material 4 at a sterilization station, in particular the sterilization station being arranged upstream of the tube forming station 9 along the web advancement path P.

With particular reference to Figure 1, the tube forming and sealing device 7 comprises a tube forming unit 22 arranged at least partially, preferably fully within the isolation chamber 14, in particular within the inner environment 11, and configured to gradually fold the web of packaging material 4 into a tube 3, in particular by (gradually) overlapping the lateral edges of the web of packaging material 4 with one another. Preferably, the tube forming unit 22 extends along a longitudinal axis, in particular having a vertical orientation.

Preferentially but not necessarily, the tube forming unit 22 comprises at least two ring shaped forming assemblies 23, in particular arranged within the isolation chamber 14, even more particularly, within the inner environment 11, configured to gradually fold in cooperation with one another the web of packaging material 4 into the tube 3, in particular by overlapping the lateral edges of the web 4 with one another.

In more detail, the ring shaped forming assemblies 23 are spaced apart from each other and parallel to one another.

Preferentially but not necessarily, the tube forming and the sealing device 7 also comprise a sealing unit at least partially arranged within the isolation chamber 14 and/or inner environment 15 and configured to longitudinally seal the tube 3.

Furthermore, the sealing unit comprises a sealing head 24 arranged within the isolation chamber 14 and being configured to transfer thermal energy to the tube 3 for longitudinally sealing tube 3. In particular, the sealing head 24 can be of any type, e.g. of the kind operated by means of induction heating and/or by a stream of a heated gas and/or by means of ultrasound and/or by laser heating and/or by any other means.

Preferably but not necessarily, the sealing unit also comprises a pressing assembly adapted to exert a mechanical force on the tube 3 so as to ensure the longitudinal sealing of the tube 3.

With particular reference to Figures 1 to 3, the filling device 9 comprises a filling pipe 29 for directing the pourable product, in use, into the tube 3. In particular, the filling pipe 29 is in fluid connection or is controlled to be in fluid connection with a pourable product storage tank (not shown and known as such), which is adapted to store/provide for the pourable product, in particular the pourable food product, to be packaged.

Preferentially but not necessarily, the illing pipe 29 is, in use, at least partially placed the within tube 3.

In particular, the filling pipe 29 comprises a (linear) main pipe portion 30 extending within (and parallel to) the tube 3 and an auxiliary pipe portion 31 partially positioned within the inner environment 15 and partially positioned within the outer environment 16. In particular, the auxiliary pipe portion 31 is transversally arranged to main pipe portion 30 (and tube 3) .

In more detail, the auxiliary pipe portion 31 comprises a section 32 placed within the outer environment 16 and a section 33 placed within the inner environment 15.

According to some preferred non-limiting embodiments, the package forming unit comprises a plurality of pairs of at least one respective operative assembly (known as such and not shown) and at least one counter-operative assembly (known as such and not shown); and
- a conveying unit (known as such and not shown) adapted to advance the respective operative assemblies and the respective counter-operative assemblies of the pairs along respective conveying paths.

In more detail, each operative assembly is configured to cooperate, in use, with the respective counter-operative assembly of the respective pair for forming one respective package 2 from tube 3. In particular, each operative assembly and the respective counter-operative assembly are configured to shape, to transversally seal and, preferably but not necessarily also to transversally cut, the tube 3 for forming the packages 2.

In further detail, each operative assembly and the respective counter-operative assembly are configured to cooperate with one another for forming a respective package 2 from the tube 3 when advancing along a respective operative portion of the respective conveying path. In particular, during advancement along the respective operative portion each operative assembly and the respective counter-operative assembly advance parallel to and in the same direction as the tube 3.

In even more detail, each operative assembly and the respective counter-operative assembly are configured to contact tube 3 when advancing along the respective operative portion of the respective conveying path.

More specifically, each operative assembly and counter-operative assembly comprises:
- a half-shell configured to contact the tube 3 and to at least partially define the shape of packages 2;
- one of a sealing element or a counter-sealing element, adapted to transversally seal tube 3 in a known manner between adjacent packages 2 for obtaining transversal seal portions 6; and
- preferentially but not necessarily, one of a cutting element (not shown and known as such) or a counter-cutting element (not shown and known as such) for transversally cutting tube 3 between adjacent packages 2, in particular between the respective transversal seal portions 6, in a manner known as such.

In particular, each half-shell is configured to be controlled between a working position and a resting position by means of a driving assembly (not shown). In particular, each half-shell is designed to be controlled into the working position with the respective operative assembly or the respective counter-operative assembly, in use, advancing along the respective operative portion.

Advantageously, the packaging apparatus 1 also comprises a magnetic mark-reading device 34 configured to read the magnetic markers arranged along the tube 3 and/or on web of packaging material 4.

According to some possible embodiments, the mark-reading device 34 can operate by means of the Hall effect.

In particular, the mark-reading device 34 is configured to determine the axial and/or angular position of the magnetic markers, in particular with respect to longitudinal axis L.

Preferably, the mark-reading device 34 is operatively connected to the control unit.

Preferably, the mark-reading device 34 comprises a magnetic sensor 35 configured to detect the magnetic markers and an elaboration unit 36 operatively connected to the magnetic sensor 35 configured to receive signals from the magnetic sensor 35 and to determine an axial position and/or an angular position (with respect to longitudinal axis L) of the magnetic markers from the received signals.

Preferably, at least the magnetic sensor 35 is arranged adjacent to the tube 3, in particular so as to detect the magnetic fields of the magnetic markers.

According to some preferred non-limiting embodiments, at least the magnetic sensor 35 is arranged within inner space 18.

According to some preferred non-limiting embodiments, the control unit is configured to control operation of the conveying device 21 and/or the package forming unit according to the axial and/or angular positions of the magnetic markers, in particular so that the package forming unit operates in register with the advancing tube 3 (i.e. the package forming unit is adapted to form, transversally seal and in particular to also transversally cut the tube 3 such that each package 2 carries the respective (and correct) pattern).

With particular reference to Figures 1 to 3, the packaging apparatus also comprises a time-domain reflectometry sensor device 37 connected to the filing pipe 31 and configured to determine a filling level of the pourable product within the tube 3. Advantageously, time-domain reflectometry sensor device 37 is mechanically and operatively connected to the filling pipe 31 such that filling pipe 29 acts as a probe head of time-domain reflectometry sensor device 37.

In other words, while the filling pipe's 29 main scope is to direct the pourable product into the tube 3 it also contributes to the determination of the filling level.

In general, it is known that in time-domain reflectometry one relies on the feeding of a base signal (such as a base electromagnetic signal) into a system to be analyzed and an assessment of a reflected signal. Thereby, it is possible to determine characteristic parameters and/or the nature of any impedance variance of the system by assessing a magnitude and/or duration and/or shape and/or the time-of-flight of the reflected signal.

In particular, in the present case, the time-domain reflectometry sensor device 37 is configured to generate a (continuous and/or pulsed and/or stepped) base signal, in particular a (continuous and/or pulsed and/or stepped) electromagnetic base signal, to feed the base signal into the filling pipe 29, to receive a reflected (electromagnetic) signal and to determine the filling level in dependence of the reflected signal (and the base signal). In particular, the filling level is determined in dependence of a magnitude and/or a duration and/or a shape and/or a time-of-flight of the reflected signal.

According to some preferred non-limiting embodiments, the base signal is an electromagnetic wave.

In particular according to the present embodiment disclosed, in use, the time-domain reflectometry sensor device 37 feeds the (electromagnetic) base signal into the filling pipe 29, which then propagates through the filling pipe 29 towards and to an interface 38 of the pourable product and the gas present within tube 3. Furthermore, in use, the (electromagnetic) base signal is at least partially reflected at interface 38 and the reflected signal propagates back through the filling pipe 29 to the time-domain reflectometry sensor device 37. As the axial position of interface 38 (with respect to longitudinal axis L) is dependent on the filling level, the reflected signal is directly dependent on the filling level.

According to some preferred non-limiting embodiments, the time-domain reflectometry sensor device 37 comprises a transmitter 39 configured to generate and to transmit the (electromagnetic) base signal into filling pipe 29 and a receiver 40 configured to receive the reflected (electromagnetic) signal.

Preferentially, the time-domain reflectometry sensor device 37 further comprises a calculation unit (not specifically shown) configured to analyze the reflected signal and to calculate the time-of-flight and/or the magnitude and/or the duration and/or the shape and to determine the filling level of the pourable product in dependence of the time-of-flight and/or the magnitude and/or the duration and/or the shape.

According to some preferred non-limiting embodiments, the calculation unit is configured to calculate the time-of-flight and to determine the filling level in dependence of the time-of-flight.

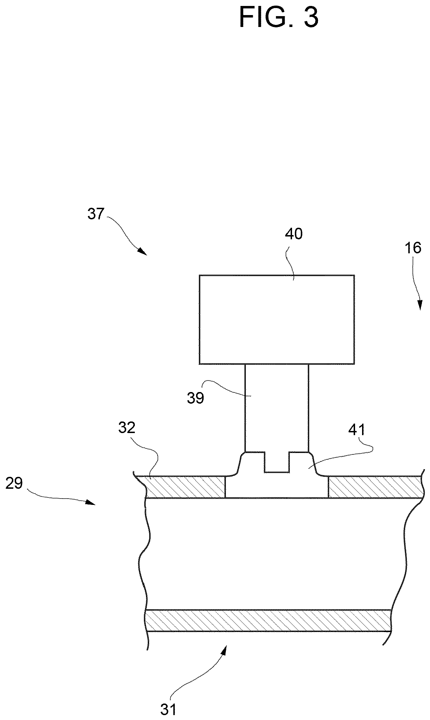

With particular reference to Figure 3, the -domain reflectometry sensor device 37 further comprises a housing seat within which at least a portion of the transmitter 39 is placed. In particular, the time-domain reflectometry sensor device 37 has a coupling element 41 carrying and/or comprising the housing seat and being fixed on, in particular welded onto the filling pipe 29.

According to some preferred non-limiting embodiments, the time-domain reflectometry sensor device 37 is arranged within the outer environment 16 (i.e. not in inner environment 15), while a probe (not shown) is connected to the filling pipe 31.

According to some preferred non-limiting embodiments, the control unit is configured to control the filling device 9 in dependence of the filling level determined by time-domain reflectometry sensor device 37, in particular so as to maintain and/or obtain a desired filling level. In particular, the control unit is configured to control a flow rate of the pourable product through the filling pipe 29 in function of the filling level.

In use, the packaging apparatus 1 forms packages 2 filled with the pourable product. In particular, the apparatus 1 forms packages 2 from the tube 3 formed from web of packaging material 4, the tube 3 being continuously filled with the pourable product.

In more detail, the operation of packaging apparatus 1 (in other words, the formation of packages 2) comprises at least the steps of:
- forming tube 3, during which the web of packaging material 4 is formed into the tube 3 at the tube forming station 8;
- longitudinally sealing the tube 3, during which the tube 3 is longitudinally sealed;
- filling the tube 3, during which the pourable product is directed through the filling pipe 29 into the tube 3;
- reading the magnetic markers; and
- determining the filling level of the pourable product within the tube 3.

Advantageously, during the step of determining the filling level, the filling level is determined by means of the time-domain reflectometry sensor device 37 connected to the filing pipe 29, the filling pipe 29 acting as a probe head of time-domain reflectometry sensor device 37.

In more detail, during the step of determining, the transmitter 39 transmits the base signal into the filling pipe 29 and the receiver 40 receives the reflected signal.

In further detail, during the step of determining, the transmitter 39 feeds the base signal into the filling pipe 29, which propagates along the filing pipe 29. Furthermore, at least a portion of the the base signal is reflected at the interface 38 so that the reflected signal propagates back within the filling pipe 29 until the receiver 40 receives and picks up the reflected signal.

Preferably, during the step of determining, the calculation unit analyzes the reflected signal (received by receiver 40), calculates the time-of-flight and/or the magnitude and/or the duration and/or the shape and determines the filling level of the pourable product within the tube 3 in dependence of the calculated time-of-flight and/or the magnitude and/or the duration and/or the shape.

According to some preferred non-limiting embodiments, the step of filling is executed in dependence of the the filling level. In particular, during the step of filling, the flow rate of the pourable product through filling pipe 29 is controlled in dependence of the the filling level.

According to some preferred non-limiting embodiments, during the step of detecting, the magnetic sensor 35 detects the magnetic markers and the elaboration unit 36 determines the axial position and/or the angular position of the magnetic markers.

Preferentially, the formation of packages 2 also comprises a first advancement step for advancing the web 4 along path P and a second advancement step during which tube 3 is advanced along path Q.

According to some preferred non-limiting embodiments, the formation of packages 2 also comprises a package forming step, during which packages 2 are formed from tube 3, in particular by shaping, transversally sealing and in particular transversally cutting tube 3.

In particular, the package forming step is executed in dependence of the detected axial and/or angular position of the magnetic markers.

Preferentially, during the the package forming step, the packages 2 are formed by operation of the package forming unit, which receives the tube 3 after the tube forming and sealing step. In particular, during the package forming step the operative assemblies and counter-operative assemblies advance along their respective conveying paths. When operative assemblies and their respective counter-operative assemblies advance along their respective operative portions, the operative assemblies and the respective counter-operative assemblies cooperate with one another for shaping, transversally sealing and, preferentially but not necessarily, transversally cutting, the advancing tube 3 so as to form packages 2.

According to some preferred non-limiting embodiments, the operation of the packaging apparatus 1 and/or the formation of packages 2 also comprises the step of conditioning the inner environment 15, in particular by means of the conditioning device. In particular, during the step of conditioning, the conditioning device introduces a sterile gas, e.g. sterile air and/or sterile nitrogen, into the inner environment 15 (so as to guarantee production under sterile and/or aseptic conditions). Preferably, during the step of conditioning, the condition device also controls the pressure within the inner environment 15, in particular for obtaining an overpressure with respect to outer environment 16.

According to some preferred non-limiting embodiments, during the step of forming the tube 3, the tube forming unit 22 overlaps the lateral edges of the web of packaging material 4 with one another.

According to some preferred non-limiting embodiments, during the step of longitudinally sealing, the sealing head 24 transfers heat to tube 3 for longitudinally sealing the tube 3.

The advantages of packaging apparatus 1 and the method according to the present invention will be clear from the foregoing description.

In particular, by relying on the time-domain reflectometry sensor device 37 one avoids the use of a floater being equipped with magnets and thus, there is no interference with the measurements of magnetic mark reading device 34.

A further advantage resides in placing time-domain reflectometry sensor device 37 outside of the inner environment 15 (i.e. within outer environment 16). In this manner, the time-domain reflectometry sensor device 37 does not need to be designed such to be resistant to the chemically active agents, which are used during sterilization processes for sterilizing the inner environment 15 and the components arranged within the inner environment 15.

Clearly, changes may be made to packaging apparatus 1 and the method as described herein without, however, departing from the scope of protection as defined in the accompanying claims.

## Claims

1. A packaging apparatus (1) for forming a plurality of sealed packages (2) filled with a pourable product comprising:
- a tube forming and sealing device (7) configured to form and longitudinally seal a tube (3) extending along a longitudinal axis (L) from a web of packaging material (4);
- a filling device (9) having a filling pipe (29) arranged, in use, within the tube (3) and being configured to direct, in use, the pourable product through the filling pipe (29) into the tube (3);
- a magnetic mark-reading device (34) configured to read magnetic markers arranged along the tube (3) and/or provided on the web of packaging material (4); and
- a time-domain reflectometry sensor device (37) connected to the filing pipe (31) and configured to determine a filling level of the pourable product within the tube (3);
wherein the filling pipe (29) acts as a probe head of the time-domain reflectometry sensor device (37).

2. Packaging apparatus according to claim 1, wherein the time-domain reflectometry sensor device (37) comprises a transmitter (39) configured to transmit a base signal into the filling pipe (29) and a receiver (40) configured to receive a reflected signal.

3. Packaging apparatus according to claim 2, wherein the time-domain reflectometry sensor device (37) further comprises a calculation unit configured to analyze the reflected signal and to calculate the time-of-flight and/or the magnitude and/or the duration and/or the shape and to determine the filling level of the pourable product in dependence of the calculated time-of-flight and/or the magnitude and/or the duration and/or the shape.

4. Packaging apparatus according to claims 2 or 3, wherein the time-domain reflectometry sensor device (37) further comprises a coupling element (41) fixed on, in particular welded onto, the filling pipe (29);
wherein a portion of the transmitter (39) is placed within a housing seat of the coupling element (41).

5. Packaging apparatus according to any one of the preceding claims, further comprising an isolation chamber (14) separating an inner environment (11) from an outer environment (12) ;
wherein the tube forming and sealing device (7) is configured to form and longitudinally seal the tube (3) within the inner environment (15); and
wherein the time-domain reflectometry sensor device (37) is arranged within the outer environment (16).

6. Packaging apparatus according to any one of the preceding claims, further comprising a control unit configured to control the filling device (9) in dependence of the filling level as determined, in use, by time-domain reflectometry sensor device (37).

7. Packaging apparatus according to any one of the preceding claims, wherein the magnetic mark-reading device (34) comprises a magnetic sensor (35) configured to detect the magnetic markers and an elaboration unit (36) configured to determine an axial position and/or an angular position of the magnetic markers.

8. Packaging apparatus according to any one of the preceding claims, further comprises:
- an auxiliary chamber (17) carrying the isolation chamber (14); and
- a package forming unit arranged within the auxiliary chamber (17) and being configured to at least form and to transversally seal the, in use, advancing tube (3) for forming the packages (2).

9. Packaging apparatus according to claim 8, wherein at least a magnetic sensor (35) of the magnetic mark-reading device (34) is arranged within the auxiliary chamber (17) and/or adjacent to the tube (3).

10. Method for forming a plurality of sealed packages (2) filled with a pourable product comprising at least the steps of:
- forming a tube (3) extending along a longitudinal axis (L) from a web of packaging material (4), the web of packaging material (4) having a plurality of magnetic markers;
- longitudinally sealing the tube (3);
- providing a filling pipe (29) being arranged within the tube (3);
- directing the pourable product through the filling pipe (29) into the tube (3);
- reading the magnetic markers arranged along the tube (3);
and
- determining a filling level of the pourable product within the tube (3);
wherein during the step of determining, the filling level is determined by means of a time-domain reflectometry sensor device (37) connected to the filling pipe (29) and during which the filling pipe (29) acts as a probe head of the time-domain reflectometry sensor device (37).

11. Method according to claim 10, wherein during the step of determining, a transmitter (39) of the time-domain reflectometry sensor device (37) transmits a base signal into the filling pipe (29) and a receiver (40) of the time-domain reflectometry sensor device (37) receives a reflected signal.

12. Method according to claim 11, wherein during the step of determining, a calculation unit of the time-domain reflectometry sensor device (37) analyzes the reflected signal, calculates the time-of-flight and/or the magnitude and/or the duration and/or the shape and determines the filling level of the pourable product in dependence of the calculated time-of-flight and/or the magnitude and/or the duration and/or the shape.

13. Method according to any one of claims 10 to 12, wherein during the step of forming, the tube (3) is formed with an inner environment (15) of an isolation chamber (14), the isolation chamber (14) separating the inner environment (15) from an outer environment (16);
wherein during the step of longitudinally sealing, the tube (3) is longitudinally sealed within the inner environment (15); and
wherein the time-domain reflectometry sensor device (37) is arranged within the outer environment (16).

14. Method according to any one of claims 10 to 13, wherein during the step of detecting, a magnetic sensor (35) detects the magnetic markers and an elaboration unit (36) determines an axial position and/or an angular position of the magnetic markers.

15. Use of a time-domain reflectometry sensor device (37) within a packaging apparatus (1), the packaging apparatus (1) being configured to form a plurality of sealed packages (2) filled with a pourable product;
wherein the packaging apparatus (1) comprises at least:
- a tube forming and sealing device (7) configured to form and longitudinally seal a tube (3) extending along a longitudinal axis (L) from a web of packaging material (4);
- a filling device (9) having a filling pipe (29) arranged, in use, within the tube (3) and being configured to direct, in use, the pourable product through the filling pipe (29) into the tube (3); and
- a magnetic mark-reading device (34) configured to read magnetic markers arranged along the tube (3) and/or provided on the web of packaging material (4);
wherein the time-domain reflectometry sensor device (37) is connected to the filing pipe (31) and is configured to determine a filling level of the pourable product within the tube (3) whereby the filling pipe (29) acts as a probe head of the time-domain reflectometry sensor device (37).
